# EUROPÄISCHE PATENTSCHRIFT

(11) **EP 0 511 570 B1**
(45) Veröffentlichungstag und Bekanntmachung des Hinweises auf die Patenterteilung: **12.03.1997**
(21) Anmeldenummer: 92106780.7
(22) Anmeldetag: 21.04.1992
(51) Int. Cl.: C08G 18/66, C08G 18/48, A47C 27/08

(54) **Gelmassen, sowie deren Herstellung und Verwendung**
Gel compounds, their preparation and use
Gels, leur préparation et leur utilisation

(30) Priorität: 01.05.1991 DE 4114213
(43) Veröffentlichungstag der Anmeldung: 04.11.1992
(73) Patentinhaber: BAYER AG, 51368 Leverkusen (DE)
(72) Erfinder: Schäpel, Dietmar, Dr., W-5000 Köln 80 (DE); Ebert, Heinz-Dieter, W-5653 Leichlingen 1 (DE); Grammes, Hartwig, Ing.-grad., W-5090 Leverkusen 1 (DE)

(56) Entgegenhaltungen:
- EP-A- 0 057 838
- WO-A-89/07117
- FR-A- 2 328 727
- US-A- 4 552 944
- US-A- 4 722 946
- WORLD PATENTS INDEX LATEST Week 8947, Derwent Publications Ltd., London, GB; AN 89-343202 ; & JP-A-102540578

## Beschreibung

Die vorliegende Erfindung betrifft verbesserte Gelmassen auf der Basis von Polyolen und Polyisocyanaten, ein Verfahren zur Herstellung dieser Gelmassen und deren Verwendung in druckverteilenden Elementen.

Gelmassen für die Verwendung in druckverteilenden Elementen, z.B. in Polstern für Rollstühle, sind vor allem beschrieben auf der Basis von Polyvinylchlorid, von Polyorganosiloxanen und von Polyurethanen, d.h. Umsetzungsprodukten aus Polyolen und Polyisocyanaten. Besonders vorteilhaft für die gezielte Anpassung der Eigenschaften an den jeweiligen Anwendungszweck haben sich hierbei Gelmassen auf Basis von Polyurethanen erwiesen, wie sie in der EP-A 0 057 838 beschrieben sind.

Solche Polyurethan-Gele, die aus Polyolen mit höherem Molekulargewicht und Polyisocyanaten erhalten werden können, haben den Nachteil, daß die beiden Reaktionskomponenten in voneinander stark abweichenden Mengen gemischt werden müssen. Dadurch muß bei der maschinellen Herstellung der Gele die Dosierung der in verhältnismäßig kleinen Mengen einzusetzenden Polyisocyanat-Komponente sehr genau und mit geringsten Schwankungen erfolgen. Sonst werden Gelmassen mit unterschiedlichen Konsistenzen erhalten. Weiterhin ist es bei derartigen Mischungsverhältnissen kaum möglich, die Komponenten homogen zu vermischen. Dies gilt insbesondere beim Einsatz von sogenannten Hochdruckmaschinen, bei denen die Mischungsdauer nur Sekundenbruchteile beträgt. Schließlich erschweren auch die sehr unterschiedlichen Viskositäten der beiden Reaktionskomponenten ein homogenes Reaktionsgemisch zu erzielen. Nichthomogene Reaktionsgemische führen ebenfalls zu uneinheitlichen Gelmassen.

Ein weiterer Nachteil der bekannten Polyurethan-Gelmassen ist ihre unter besonderen Belastungen nur begrenzte Strukturfestigkeit, wie sie z.B. in Form von Knick- und Scherbeanspruchungen bei druckverteilenden Gel-Auflagen auf Krankenbetten auftreten.

Es wurden nun verbesserte Gelmassen auf der Basis von Reaktionsprodukten aus Polyolen und Polyisocyanaten gefunden, die dadurch gekennzeichnet sind, daß die Polyolkomponente aus einem Gemisch aus
a) einem oder mehreren Polyolen mit Hydroxylzahlen unter 112 und
b) einem oder mehreren Polyolen mit Hydroxylzahlen im Bereich 112 bis 600 besteht,
wobei das Gewichtsverhaltnis der Komponente a) zu Komponente b) zwischen 90:10 und 10:90 liegt, die Isocyanatkennzahl des Reaktionsgemisches im Bereich von 15 bis 59,81 liegt und das Produkt aus Isocyanat-Funktionalität und Funktionalitat der Polyolkomponente mindestens 6,15 betragt.

Die erfindungsgemäße Gelmassen sind im allgemeinen wasserfrei.

Unter Isocyanatkennzahl wird das Äquivalentverhältnis (NCO/OH) x 100 verstanden. So bedeutet z.B. eine Isocyanatkennzahl von 15, daß auf eine reaktive OH-Gruppe in den Polyolen 0,15 reaktive NCO-Gruppen im Polyisocyanat oder auf eine reaktive NCO-Gruppe im Polyisocyanat 6,67 reaktive OH-Gruppen in den den Polyolen vorliegen. Entsprechend bedeutet eine Isocyanatkennzahl von 70, daß auf eine reaktive OH-Gruppe in den Polyolen 0,7 reaktive NCO-Gruppen im Polyisocyanat oder auf eine reaktive NCO-Gruppe im Polyisocyanat 1,43 reaktive NCO-Gruppen im Polyisocyanat vorliegen.

Polyole mit einer Hydroxylzahl kleiner als 112 kann man auch als höhermolekulare Polyole und Polyole mit einer Hydroxylzahl von 112 bis 600 als niedermolekulare Polyole bezeichnen.

Das Gewichtsverhältnis von höhermolekularen Polyolen zu niedermolekularen Polyolen liegt zwischen 90:10 und 10:90. Vorzugsweise liegt es zwischen 85:15 und 50:50.

Erfindungsgemäße Gelmassen können gegebenenfalls zusätzlich aus der Polyurethanchemie an sich bekannte Füll- und/oder Zusatzstoffe enthalten, beispielsweise in Mengen von insgesamt bis zu 50 Gew.-%, bezogen auf das Gesamtgewicht der Gelmasse.

Die vorliegende Erfindung betrifft auch ein Verfahren zur Herstellung von Gelmassen, das dadurch gekennzeichnet ist, daß man eine Mischung aus
a) einem oder mehreren Polyisocyanaten und
b) einer Polyolkomponente, bestehend aus
   - einem oder mehreren Polyolen (b1) mit Hydroxylzahlen unter 112 und
   - einem oder mehreren Polyolen (b2) mit Hydroxylzahlen im Bereich 112 bis 600 und
c) gegebenenfalls einem Katalysator für die Reaktion zwischen Isocyanat- und Hydroxylgruppen und
d) gegebenenfalls aus der Polyurethanchemie an sich bekannten Füll- und/oder Zusatzstoffen,
wobei das Gewichtsverhaltnis der Komponente (b1) zu Komponente (b2) zwischen 90:10 und 10:90 liegt, die Isocyanatkennzahl der Mischung im Bereich von 15 bis 59,81 liegt und das Produkt aus Isocyanat-Funktionalitat und Funktionalitat der Polyolkomponente mindestens 6,15 betragt, gelieren laßt.

Die eingesetzten Polyole können primäre und/oder sekundäre Hydroxylgruppen aufweisen. Im Falle der Verwendung von Gemischen von Polyolen mit primären und sekundären Hydroxylgruppen ist feststellbar, daß bevorzugt die primären Hydroxylgruppen mit der Isocyanatkomponente reagieren. Für den Begriff "Funktionalität der Polyolkomponente" könnten dann eventuell nur die primären Hydroxylgruppen der Polyolkomponente in Betracht gezogen werden. Zur Berechnung der Isocyanatkennzahl im Sinne der vorliegenden Erfindung sind jedoch jeweils die gesamten Hydroxylgruppen der Polyolkomponente heranzuziehen.

Bei der Herstellung erfindungsgemäßer Gelmassen betragt das Produkt aus Isocyanat-Funktionalität und Funktionalität der Polyolkomponente mindestens 6,15. Vorzugsweise beträgt es mindestens 6,5, insbesondere mindestens 7,5.

Die Polyolkomponente erfüllt neben ihrer Funktion als Aufbaukomponente für die Polyurethanmatrix zusätzlich noch die Rolle eines Dispersionsmittels. Bei den erfindungsgemäß zu verwendenden Polyolen kann es sich vorzugsweise um in der Polyurethanchemie an sich bekannte, bei 10 bis 60°C flüssige Polyhydroxy-polyester, -polyether, -polythioether, -polyacetale, -polycarbonate, -polyesteramide -polyamide oder -polybutadiene der oben angegebenen Hydroxylzahlenbereiche handeln.

Bei den Polyhydroxy-polyestern kann es sich z.B. um Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren handeln. Anstelle der freien Polycarbonsäuren können auch die entsprechenden Polycarbonsäureanhydride oder entsprechende Polycarbonsäureestern von niederen Alkoholen oder deren Gemische zur Herstellung des Polyesters verwendet worden sein. Die Polycarbonsäuren können aliphatischer, cycloaliphatischer, aromatischer und/oder heterocyclischer Natur sein und gegebenenfalls, z.B. durch Halogenatome, substiutiert und/oder auch ungesättigt sein.

Als Beispiele für solche Carbonsäuren, deren Anhydride und deren Ester seien genannt:
Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanyhdrid, Endomethylentetrahydrophthalsäureanhydrid, Glutarsäureanhydrid, Maleinsäure, Maleinsäureanhydrid, Fumarsäure, dimerisierte und trimerisierte ungesättigte Fettsäuren (gegebenenfalls in Mischung mit monomeren ungesättigten Fettsäuren, z.B. Ölsäure), Terephthalsäuredimethylester und Terephthalsäure-bis-glykolester. Als mehrwertige Alkohole kommen z.B. Ethylenglykol, Propylenglykol-(1,2) und -(1,3), Butylenglykol-(1,4), -(1,3) und -(2,3), Hexandiol-(1,6), Octandiol-(1,8), Neopentylglykol, 1,4-Bis-hydroxymethylcyclohexan, 2-Methyl-1,3-propandiol, Glycerin, Trimethylolpropan, Hexantriol-(1,2,6), Butantriol-(1,2,4), Trimethylolethan, Pentaerythrit, Chinit, Mannit, Sorbit, Formit, Methylglykosid, Diethylenglykol, Triethylenglykol, höhere Polyethylenglykole, Dipropylenglykol, höhere Polypropylenglykole, Dibutylenglykol und höhere Polybutylenglykole in Frage. Die Polyester können anteilig endständige Carboxylgruppen aufweisen. Auch Polyester aus Lactonen z.B. ε-Caprolacton, oder aus Hydroxycarbonsäuren, z.B. ω-Hydroxycapronsäure, sind einsetzbar.

Bei den Polyhydroxy-polyethem kann es sich z.B. um mindestens zwei, im allgemeinen zwei bis acht, vorzugsweise drei bis sechs Hydroxylgruppen aufweisende Polyether handeln. Solche Polyhydroxy-polyether sind an sich bekannt und können z.B. hergestellt werden durch Polymerisation von Epoxiden wie Ethylenoxid, Propylenoxid, Butylenoxid, Tetrahydrofuran, Styroloxid und/oder Epichlorhydrin mit sich selbst, z.B. in Gegenwart von Lewis-Katalysatoren wie BF₃, oder durch Anlagerung dieser Epoxide, vorzugsweise von Ethylenoxid und/oder Propylenoxid, beim Einsatz von zwei oder mehr Epoxiden im Gemisch oder nacheinander, an Starterkomponenten mit reaktionsfähigen Wasserstoffatomen, wie Wasser, Alkohole, Ammoniak oder Amine, z.B. Ethylenglykol, Propylenglykol-(1,3), Propylenglykol-(1,2), Trimethylolpropan, Glycerin, Sorbit, 4,4'-Dihydroxy-diphenylpropan, Anilin, Ethanolamin oder Ethylendiamin. Auch Sucrosepolyether, wie sie z.B. in der DE-AS 1 176 358 und der DE-AS 1 064 938 beschrieben werden, sowie auf Formit oder Formose gestartete Polyether (siehe DE-OS 2 639 083 und DE-OS 2 737 951), kommen in Frage.

Als Polyole sind auch OH-Gruppen aufweisende Polybutadiene geeignet.

Bei den Polyhydroxy-polythioethern sind insbesondere die Kondensationsprodukte von Thiodiglykol mit sich selbst und/oder mit anderen Glykolen, Dicarbonsäuren, Formaldehyd, Aminocarbonsäuren und/oder Aminoalkoholen von Interesse. Je nach den Co-Komponenten handelt es sich bei den Produkten z.B. um Polythiomischether, Polythioetherester oder Polythioetheresteramide.

Als Polyhydroxy-polyacetale kommen z.B. die aus Glykolen, wie Diethylengylkol, Triethylenglykol, 4,4'-Dioxyethoxydiphenyldimethylmethan und Hexandiol mit Formaldehyd herstellbaren Verbindungen in Frage. Auch durch Polymerisation cyclischer Acetale, z.B. Trioxan (siehe DE-OS 1 694 128), lassen sich für die vorliegende Erfindung geeignete Polyacetale herstellen.

Als Polyhydroxy-polycarbonate kommen beispielsweise an sich bekannte Typen in Betracht, die z.B. durch Umsetzung von Diolen wie Propandiol-(1,3), Butandiol-(1,4), Hexandiol-(1,6), Diethylenglykol, Triethylenglykol, Tetraethylenglkyol und/oder Thiodiglykol mit Diarylcarbonaten, z.B. Diphenylcarbonat, oder Phosgen hergestellt werden können, (siehe DE-AS 1 694 080, DE-AS 1 915 908, DE-AS 2 221 751 und DE-OS 2 605 024).

Bei den Polyhydroxyl-polyesteramiden und -polyamiden kann es sich z.B. um die aus mehrwertigen gesättigten oder ungesättigten Carbonsäuren oder deren Anhydriden und mehrwertigen gesättigten oder ungesättigten Aminoalkoholen, Diaminen, Polyaminen und deren Mischung gewonnenen, vorwiegend linearen Kondensate handeln.

Auch bereits Urethan- oder Harnstoffgruppen enthaltende Polyhydroxylverbindungen sowie gegebenenfalls modifizierte natürliche Polyole, wie Rizinusöl, können in das erfindungsgemäße Verfahren als Polyolkomponente eingesetzt werden.

Weiterhin können als Polyolkomponente gegebenenfalls Polyhydroxylverbindungen eingesetzt werden, in welchen hochmolekulare Polyaddukte, Polykondensate oder Polymerisate in feindisperser oder gelöster Form enthalten sind. Derartige Polyhydroxylverbindungen können z.B. erhalten werden, wenn man Polyadditionsreaktionen (z.B. Umsetzungen zwischen Polyisocyanaten und aminofunktionellen Verbindungen) oder Polykondensationsreaktionen (z.B. zwischen Formaldehyd und Phenolen und/oder Aminen) in situ in den oben genannten Hydroxylgruppen aufweisenden Verbindungen ablaufen läßt Derartige Verfahren sind beispielsweise in der DE-AS 1 168 075, DE-AS 1 260 142 und den DE-Offenlegungsschriften 2 324 134, 2 423 984, 2 512 385, 2 513 815, 2 550 796, 2 550 797, 2 550 833, 2 550 862, 2 633 293 und 2 639 254 beschrieben. Es ist auch möglich, hochmolekulare Polyaddukte, Kondensate oder Polymerisate enthaltende Polyhydroxylverbindungen einzusetzen, die erhalten werden, indem man eine wäßrige Polymerdispersion mit einer Polyhydroxylverbindung vermischt und anschließend aus dem Gemisch das Wasser entfernt (siehe US-PS 3 869 413 und DE-OS 2 550 860).

Auch durch Vinylpolymerisate modifizierte Polyhydroxylverbindungen, wie sie z.B. durch Polymerisation von Styrol und Acrylnitril in Gegenwart von Polyethern (siehe US-Patentschriften 3 383 351, 3 304 273, 3 523 093 und 3 110 695, sowie DE-AS 1 152 536) oder Polycarbonatpolyolen (siehe DE-PS 1 769 795 und US-PS 3 637 909) erhalten werden können, sind für das erfindungsgemäße Verfahren als Polyolkomponente geeignet. Bei Verwendung von Polyetherpolyolen, die gemäß den DE-Offenlegungsschriften 2 442 101, 2 644 922 und 2 646 141 durch Pfropfpolymerisation mit Vinylphosphonsäureestern sowie gegebenenfalls (Meth)acrylnitril, (Meth)acrylamid oder OH-funktionellen (Meth)acrylsäureestern modifiziert wurden, erhält man Gelmassen mit besonders ausgeprägter Flammwidrigkeit.

Erfindungsgemäß einzusetzende Polyolkomponenten sind z.B. in High Polymers, Vol. XVI, "Polyurethanes, Chemistry and Technology", verfaßt von Saunders-Frisch, Interscience Publishers, New York-London, Band I, (1962), Seiten 32-42 und Seiten 44-54 und Band II, (1964), Seiten 5-6 und 198-199, sowie im Kunststoff-Handbuch, Band VII, Vieweg-Höchtlen, Carl-Hanser-Verlag, München (1966), z.B. auf den Seiten 45-71, beschrieben. Selbstverständlich können auch Mischungen der obengenannten Verbindungen, z.B. Mischungen von Polyethern und Polyestern, eingesetzt werden.

Bevorzugt werden erfindungsgemäß die in der Polyurethan-Chemie an sich bekannten Polyhydroxypolyether der genannten Art mit 2 bis 8, bevorzugt 3 bis 6 Hydroxylgruppen pro Molekül als Polyolkomponente eingesetzt. Besonders bevorzugt sind dabei, gegebenenfalls als Abmischungskomponente mit anderen Polyethern, solche, die zumindest endständig Ethylenoxideinheiten und damit primäre Hydroxylgruppen aufweisen. Der Anteil an Ethylenoxidsequenzen in erfindungsgemäß einzusetzenden Polyethern beträgt vorzugsweise mindestens 15 Gew.-%, besonders bevorzugt mindestens 20 Gew.-%.

Für die erfindungsgemäße Herstellung von Gelmassen können als Polyisocyanate z.B. aliphatische, cycloaliphatische, araliphatische, aromatische und/oder heterocyclische Polyisocyanate eingesetzt werden, wie sie z.B. von W. Siefken in Justus Liebigs Annalen der Chemie, 562, Seiten 75 bis 136, beschrieben werden, beispielsweise solche der Formel

Q(NCO)ₙ

in der
n für 2 bis 4, vorzugsweise 2, steht
und
- Q: einen aliphatischen Kohlenwasserstoffrest mit 2 bis 18, vorzugsweise 6 bis 10 C-Atomen,
- einen: cycloaliphatischen Kohlenwasserstoffrest mit 4 bis 15, vorzugsweise 5 bis 10 C-Atomen,
- einen: aromatischen Kohlenwasserstoffrest mit 6 bis 15, vorzugsweise 6 bis 13 C-Atomen,
- oder einen: araliphatischen Kohlenwasserstoffrest mit 8 bis 15, vorzugsweise 8 bis 13 C-Atomen
bedeutet.

Als Einzelverbindungen dieser Art seien genannt:
Ethylen-diisocyanat, 1,4-Tetramethylendiisocyanat, 1,6-Hexamethylendiisocyanat, 1,12-Dodecandiisocyanat, Cyclobutan-1,3-diisocyanat, -1,4-diisocyanat Cyclohexan-1,3- und und beliebige Gemische dieser Isomeren, 1-Isocyanato-3,3,5-trimethyl-5-isocyanatomethyl-cyclohexan (DE-AS 1 202 785 und US-PS 3 401 190), 2,4- und 2,6-Hexahydrotoluylendiisocyanat und beliebige Gemische dieser Isomeren, Hexahydro-1,3- und/oder -1,4-phenylendiisocyanat, Perhydro-2,4'- und/oder -4,4'-diphenylmethan-diisocyanat, 1,3- und 1,4-Phenylendiisocyanat, 2,4- und 2,6-Toluylendiisocyanat und beliebige Gemische dieser Isomeren, Diphenylmethan-2,4'-und/oder-4,4'-diisocyanat und Naphthylen-1,5-diisocyanat.

Ferner kommen beispielsweise in Frage:
Triphenylmethan-4,4',4''-triisocyanat, Polyphenylpolymethylen-polyisocyanate, wie sie durch Anilin-Formaldehyd-Kondensation und anschließende Phosgenierung erhalten und z.B. in der GB-PS 874 430 und der GB-PS 848 671 beschrieben werden, m- und p-Isocyanatophenylsulfonyl-isocyanate (siehe US-PS 3 277 138), Carbodiimidgruppen aufweisende Polyisocyanate (siehe DE-PS 1 092 007, US-PS 3 152 162 und DE-Offenlegungsschriften 2 504 400, 2 537 685 und 2 552 350), Norbornan-Diisocyanate (gemäß US-PS 3 492 330), Allophanatgruppen aufweisende Polyisocyanate (siehe GB-PS 994 890, BE-PS 761 626 und NL-Patentanmeldung 71 02 524), Isocyanuratgruppen aufweisende Polyisocyanate (siehe US-PS 3 001 973, DE-Patentschriften 1 022 789, 1 222 067 und 1 027 394, DE-OS 1 929 034 und DE-OS 2 004 048), Urethangruppen aufweisende Polyisocyanate ( siehe BE-PS 752 261, US-PS 3 394 164 und US-PS 3 644 457), acylierte Harnstoffgruppen aufweisende Polyisocyanate (siehe DE-PS 1 230 778), Biuretgruppen aufweisende Polyisocyanate ( siehe US-Patentschriften 3 124 605 und 3 201 372 und GB-PS 889 050), durch Telomerisationsreaktionen hergestellte Polyisocyanate (siehe DE-PS 3 654 106), Estergruppen aufweisende Polyisocyanate (siehe GB-Patentschriften 965 474 und 1 072 956, US-PS 3 567 763 und DE-PS 1 231 688), Umsetzungsprodukte der obengenannten Isocyanate mit Acetalen (siehe DE-PS 1 072 385) und polymere Fettsäureester enthaltende Polyisocyanate (siehe US-PS 3 455 883).

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Bevorzugte Isocyanate sind z.B. das 2,4- und 2,6-Toluylendiisocyanat und beliebige Gemische dieser Isomeren, Polyphenyl-polymethylen-polyisocyanate, wie sie durch Anilin-Formaldehyd-Kondensation und anschließende Phosgenierung hergestellt werden können und Carbodiimidgruppen, Urethangruppen, Allophanatgruppen, Isocyanuratgruppen, Harnstoffgruppen oder Biuretgruppen aufweisende Polyisocyanate.

Besonders bevorzugte Polyisocyanate sind biuretisiertes oder trimerisiertes 1,6-Hexamethylendiisocyanat, durch Tripropylenglykol modifiziertes Diphenylmethan-4,4'-diisocyanat, Mischungen aus Polyphenyl-polymethylenpolyisocyanaten und Diphenylmethan-2,4'- und -4,4'-diisocyanaten, wobei vorzugsweise der Zweikernanteil über 70 Gew.-% beträgt und gleichzeitig der Gehalt an 2,4'-Isomeren über 30 % liegt.

Der Gehalt an Polyisocyanaten in den erfindungsgemäß für Gelmassen herzustellenden Mischungen beträgt beispielsweise 5 bis 50 Gew.-%, vorzugsweise 10 bis 35 Gew.-%, bezogen auf das Gesamtgewicht der Polyolkomponente und der Polyisocyanate.

Die an sich langsam ablaufende Gelbildungsreaktion kann gegebenenfalls durch Zusatz von Katalysatoren beschleunigt werden. Dabei können an sich bekannte, die Reaktion zwischen Hydroxyl- und Isocyanatgruppen beschleunigenden Katalysatoren verwendet werden, z.B. tertiäre Amine, wie Triethylamin, Tributylamin, N-Methyl-morpholin, N-Ethyl-morpholin, N,N,N',N'-Tetramethyl-ethylendiamin, 1,4-Diaza-bicyclo-(2,2,2)-octan, N-Methyl-N'-dimethylaminoethyl-piperazin, N,N-Dimethylbenzylamin, Bis-(N,N-diethylaminoethyl)-adipat, N,N-Dimethylbenzylamin, Pentamethyldiethylentriamin, N,N-Dimethylcyclohexylamin, N,N,N',N'-Tetramethyl-1,3-butandiamin, N,N-Dimethyl-β-phenylethylamin, 1,2-Dimethylimidazol und 2-Methylimidazol. Als Katalysatoren kommen auch an sich bekannte Mannichbasen aus sekundären Aminen, wie Dimethylamin, und Aldehyden, vorzugsweise Formaldehyd, oder Ketonen wie Aceton, Methylethylketon oder Cyclohexanon und Phenolen, wie Phenol, Nonylphenol oder Bisphenolen in Frage.

Als Katalysatoren kommen ferner Silaamine mit Kohlenstoff-Silizium-Bindungen (siehe z.B. DE-PS 1 229 290 und US-PS 3 620 984) in Frage, z.B. 2,2,4-Trimethyl-2-silamorpholin und 1,3-Diethylaminomethyl-tetramethyl-disiloxan.

Als Katalysatoren kommen auch stickstoffhaltige Basen wie Tetraalylammoniumhydroxide, Alkalihydroxide wie Natriumhydroxid, Alkaliphenolate wie Natriumphenolat oder Alkalialkoholate wie Natriummethylat in Betracht. Auch Hexahydrothazine können als Katalysatoren eingesetzt werden.

Außerdem sind auch organische Metallverbindungen, insbesondere organische Zinnverbindungen, als Katalysatoren geeignet. Als organische Zinnverbindungen sind Zinn(II)-salze von Carbonsäuren wie Zinn(II)-acetat, -octoat, -ethylhexoat und Zinn(IV)-Verbindungen, z.B. Dibutylzinn(IV)-oxid, -chlorid, -acetat, -dilaurat, -maleat oder Dioctylzinnacetat bevorzugt.

Weitere Katalysatoren, sowie Einzelheiten über die Wirkungsweise der Katalysatoren sind im Kunststoff-Handbuch Band VII, herausgegeben von Vieweg und Höchtlen, Carl-Hanser-Verlag München 1966, z.B. auf den Seiten 96-102 beschrieben.

Es können auch Gemische verschiedener Katalysatoren verwendet werden.

Die Katalysatoren können z.B. in einer Menge von 0,1 bis 10 Gew.-%, bezogen auf das Gesamtgewicht des Gemisches zur Gelmassen-Herstellung, eingesetzt werden.

Bei den in den erfindungsgemäßen Gelmassen gegebenenfalls enthaltenen, aus der Polyurethan-Chemie an sich bekannten Füll- und/oder Zusatzstoffen kann es sich z.B. um anorganische und/oder organische Füllstoffe, färbende Agenzien, wasserbindende Mittel, oberflächenaktive Substanzen, Pflanzenschutzmittel, Streckmittel und/oder Weichmacher handeln.

Anorganische Füllstoffe können z.B. sein: Schwerspat, Kreide, Gips, Kieserit, Soda, Titandioxid, Quarzsand, Kaolin, Ruß, Mikroglaskugeln und Mikroglashohlkugeln. Organische Füllstoffe können z.B. sein: Pulver auf Basis von Polystyrol, Polyvinylchlorid, Harnstoff-Formaldehyd-Massen und/oder Polyhydrazodicarbonamiden (z.B. aus Hydrazin und Toluylendiisocyanat erhaltene). Dabei können z.B. Harnstoff-Formaldehyd-Harze oder Polyhydrazodicarbonamide direkt in einem für die erfindungsgemäße Gelmassen-Herstellung zu verwendenden Polyole hergestellt worden sein. Es können auch Mikrohohlkugeln organischer Herkunft zugefügt werden.

Anorganische und/oder organische Füllstoffe können auch in Form von Kurzfasern eingesetzt werden. Als Kurzfasern kommen z.B. Glasfasern und/oder Fasern organischer Herkunft, z.B. Polyester- oder Polyamidfasern, infrage. Die Kurzfasern können z.B. 0,01 bis 1 cm lang sein. Anorganische Füllstoffe können auch Metallpulver sein, z.B. Eisen- oder Kupferpulver.

Als färbende Agenzien können erfindungsgemäße Gelmassen z.B. für die Einfärbung von Polyurethanen an sich bekannte Farbstoffe und/oder Farbpigmente auf organischer und/oder anorganischer Basis enthalten, beispielsweise Eisenoxid- und/oder Chromoxidpigmente und Pigmente auf Phthalocyanin- und/oder Monoazo-Basis.

Als wasserbindende Mittel kommen vorzugsweise Zeolithe infrage. Geeignete synthetische Zeolithe sind z.B. unter der Bezeichnung Baylith® im Handel.

Als oberflächenaktive Substanzen seien z.B. Cellulosepulver, Aktivkohle und Kieselsäurepräparate genannt.

Als Flammschutzmittel können beispielsweise Natrium-polymetaphosphate oder Aminphosphate, z.B. Melaminphosphate zugesetzt werden.

Als Streckmittel kommen insbesondre flüssige, praktisch inerte Substanzen infrage, die einen Siedepunkt von über 150°C (bei Normaldruck) aufweisen. Beispielsweise seien genannt: Alkyl-, alkoxy- und/oder halogensubstituierte aromatische Verbindungen wie Dodecylbenzol, m-Dipropoxylbenzol und/oder o-Dichlorbenzol, halogenierte aliphatische Verbindungen wie chlorierte Paraffine, organische Carbonate wie Propylencarbonat, Carbonsäureester wie Dioctylphthalat sowie Dodecylsulfonsäureester und organische Phosphorverbindungen, wie Trikresylphosphat.

Als Weichmacher seien beispielsweise Ester von mehrwertigen, vorzugsweise zweiwertigen Carbonsäuren mit einwertigen Alkoholen genannt. Die Säurekomponente solcher Ester kann sich z.B. herleiten von Bernsteinsäure, Isophpthalsäure, Trimellitsäure, Phthalsäureanhydrid, Tetra- und/oder Hexahydrophthalsäureanhydrid,Endomethylen-tetrahydrophthalsäureanhydrid, Glutarsäureanhydrid, Maleinsäureanhydrid, Fumarsäure und/oder dimeren und/oder trimeren Fettsäuren wie Ölsäure, gegebenenfalls in Mischung mit monomeren Fettsäuren. Die Alkoholkomponente solcher Ester kann sich z.B. herleiten von verzweigten und/oder unverzweigten aliphatischen Alkoholen mit 1 bis 20 C-Atomen, wie Methanol, Ethanol, Propanol, Isopropanol, n-Butanol, sek.-Butanol, tert.-Butanol, den verschiedenen Isomeren des Pentylalkohols, Hexylalkohols, Octylalkohols (z.B. 2-Ethyl-Hexanol), Nonylalkohols, Decylalkohols, Laurylalkohols, Myristylalkohols, Cetylalkohols, Stearylalkohols und/oder von natürlich vorkommenden oder durch Hydrierung natürlich vorkommender Carbonsäuren erhältlichen Fett- und Wachsalkoholen. Als Alkoholkomponente kommen auch cycloaliphatische und/oder aromatische Hydroxyverbindungen infrage, beispielsweise Cyclohexanol und dessen Homologe, Phenol, Kresol, Thymol, Carvacrol, Benzylalkohol und/oder Phenylethanol.

Als Weichmacher kommen außerdem Ester der obengenannten Alkohole mit Phosphorsäure in Frage. Gegebenenfalls können auch Phosphorsäureester aus halogenierten Alkoholen, wie z.B. Trichlorethylphosphat, eingesetzt werden. Im letzteren Fall kann gleichzeitig mit dem Weichmacher-Effekt ein flammhemmender Effekt erzielt werden. Selbstverständlich können auch gemischte Ester der obengenannten Alkohole und Carbonsäuren eingesetzt werden.

Bei den Weichmachern kann es sich auch um sogenannte polymere Weichmacher handeln, z.B. um Polyester der Adipin-, Sebacin- und/oder Phthalsäure.

Weiter sind auch Alkylsulfonsäureester des Phenols, z.B. Paraffinsulfonsäurephenylester, als Weichmacher verwendbar.

Der Gehalt an Füll- und/oder Zusatzstoffen kann in den erfindungsgemäßen Gelmassen und bei deren Herstellung z.B. insgesamt bis zu 50 Gew.-%, bezogen auf das Gesamtgewicht der Gelmasse, betragen.

Bei einer besonderen Ausführungsform der erfindungsgemäßen Herstellung von Gelmassen kann Luft oder ein anderes Gas in das Reaktionsgemisch eingepreßt oder eingerührt werden, beispielsweise in einer Menge von bis zu 20 Gew.-%, bezogen auf die Gelmasse. Die auf diese Weise hergestellten Gelmassen zeichnen sich durch ein geringeres Gewicht aus.

Die erfindungsgemäßen Gelmassen können z.B. als druckverteilende Elemente verwendet werden. Dazu ist es im allgemeinen erforderlich, die Gelmassen mit einer teilweisen, einseitigen oder allseitigen Beschichtung, Abdeckung oder Umhüllung zu versehen.

Bei Anwendungen, bei denen die gezielt einstellbare Haftfähigkeit der Gelmassen genutzt werden soll, z.B. bei Auflagen auf menschliche oder tierische Körperoberflächen, ist nur eine teilweise oder einseitige Beschichtung oder Abdeckung erforderlich. Dies ist insbesondere bei Abwendungen für den einmaligen Gebrauch der Fall.

Eine allseitige, d.h. vollständige Umhüllung der Gelmasse ist bei vielen Anwendungen aus hygienischen Gründen erforderlich. Um die druckverteilende Wirkung der Gelmassen möglichst weitgehend zu erhalten, ist es vorteilhaft, hierzu elastische, dehnfähige Umhüllungsmaterialien zu verwenden. Hierfür kommen insbesondere elastische Folien infrage, z.B. Polymerfolien mit gutem zähelastischen Verhalten (gemessen beispielsweise im biaxialen Durchstoßversuch nach DIN 55 373) und hoher Reißdehnung und Reißkraft (gemessen beispielsweise nach DIN 53 455).

Solche Folien können beispielsweise Polyurethanfolien sein wie sie unter den Handelsnamen Walopur® von der Fa Wolff-Walsrode und Platilon® von der Fa. Plate angeboten werden. Geeignete Folien können auch aus thermoplastischen Polyesterelastomeren (z.B. Hytrel® der Fa. DuPont) oder aus auf Styrol und Butadien basierenden Blockcopolymerisaten, gegebenenfalls in Abmischung mit Polyolefinen, hergestellt worden sein. Geeignete auf Styrol basierende Blockcopolymere sind beispielsweise die unter dem Handelsnamen Cariflex® von der Fa. Shell angebotenen Produkte. Geeignet sind außerdem Styrol-Ethylen-Butylen-Styrol-Blockcopolymere. Solche Blockcopolymere werden z.B. von der Fa. Shell unter dem Handelsnahinen Kraton® angeboten. Geeignete Folien sind weiterhin solche aus Ethylen-Vinylacetat-Polymeren, gegebenenfalls im Verbund mit anderen Polymerfolien, sowie dünne Filme aus natürlichen oder synthetischen Kautschukmaterialien. Auch die Verwendung von Folien aus weichgemachtem Polyvinylchlorid ist möglich.

Diese Folien lassen sich thermisch verformen, schweißen oder kleben. Es ist daher besonders einfach, aus diesen Folien geeignete Hüllen für druckverteilende Elemente herzustellen, die erfindungsgemäße Gelmassen enthalten.

In einer besonderen Ausführungsform können auch Hüllen für erfindungsgemäße Gelmassen erhalten werden, indem auf tiefgezogene Artikel aus den genannten Folien eine Deckfolie aufgeschweißt oder aufgeklebt wird oder zwei tiefgezogene Halbschalen aus diesen Folien aneinandergeklebt oder geschweißt werden.

Geeignet als Hüllen sind auch beschichtete elastische textile Flächengebilde wie Gewebe, Gewirke, Gestricke oder Vliese aus natürlichen oder synthetischen organischen oder anorganischen Fasermaterialien mit elastischem Charakter, die eine hohe Reißdehnung und Reißkraft (nach DIN 53 455) aufweisen. Geeignete Beschichtungen für solche elastischen textilen Flächengebilde sind z.B. elastische Polyurethanbeschichtungen, wie sie z.B. von der BAYER AG unter der Bezeichnung Impranil® angeboten werden. Es sind auch Beschichtungen auf Basis von weichgemachtem Polyvinylchlorid möglich.

Solche beschichteten textilen Flächengebilde lassen sich vernähen, kleben oder schweißen. Es ist daher besonders einfach, aus beschichteten textilen Flächengebilden geeignete Hüllen für die erfindungsgemäßen Gelmassen herzustellen.

Die Umhüllung der erfindungsgemäßen Gelmassen kann auch erfolgen, indem man auf die Oberfläche der Gelmasse ein flüssiges oder gelöstes Material aufträgt, das dort zu einem elastischem Material erstarren oder dort einem anderem filmbildenden Prozeß unterworfen werden kann. Besonders geeignet sind hierfür Beschichtungsmaterialien auf Polyurethanbasis, wie sie beispielsweise von der BAYER AG unter dem Namen Impranil® angeboten werden, die dann in Lösung oder als Dispersion auf eine erfindungsgemäße Gelmasse aufgebracht werden können und nach Entfernung des Lösungs- oder Dispersionsmittels eine geeignete elastische Umhüllung ergeben.

Geeignete flexible Umhüllungen können auch erhalten werden, wenn man die Gelmasse mit einem ein Polyurethan bildenden Zweikomponentenlack überzieht.

Die erfindungsgemäße Herstellung von Gelmassen kann auf verschiedene Weise erfolgen.

Man kann beispielsweise nach dem one-shot- oder den Prepolymer-Verfahren arbeiten. Beim one-shot-Verfahren werden alle Komponenten, z.B. Polyole, Polyisocyanate, gegebenenfalls Katalysator und gegebenenfalls Füll- und/oder Zusatzstoffe auf einmal zusammengegeben und intensiv miteinander vermischt.

Beim Prepolymer-Verfahren sind zwei Arbeitsweise möglich. Entweder stellt man zunächst ein Isocyanat-Prepolymer her, indem man einen Teil der Polyolmenge mit der gesamten, für die Gelbildung vorgesehenen Polyisocyanatmenge umsetzt, und fügt dann dem erhaltenen Prepolymer die restliche Menge an Polyol sowie gegebenenfalls Katalysator, Füll- und/oder Zusatzstoffen zu und mischt intensiv. Man kann auch zunächst die gesamte, für die Gelbildung vorgesehene Menge an Polyol mit einem Teil der Polyisocyanatmenge zu einem Hydroxyl-Prepolymer umsetzen und anschließend die restliche Menge an Isocyanat und die gegebenenfalls einzusetzenden Komponenten zumischen.

Besonders vorteilhaft ist eine Variante des one-shot-Verfahrens in Kombination mit dem Hydroxyl-Prepolymer-Verfahren. Hierbei wird das Polyolgemisch, gegebenenfalls der Katalysator und/oder die Füll- und/oder Zusatzstoffe, und zwei verschiedene Polyisocyanate auf einmal zusammengegeben und intensiv vermischt. Eines der Polyisocyanate ist dabei aromatisch, das andere aliphatisch. Wegen der stark unterschiedlichen Reaktivität dieser beiden Polyisocyanattypen entsteht dann zunächst ein Hydroxylprepolymer aus dem gesamten Polyol und dem reaktiveren Polyisocyanat, das dann im allgemeinen innerhalb weniger Minuten mit dem weniger reaktionsfähigen Polyisocyanat unter Gelbildung reagiert. Hierbei werden Gelmassen mit besonders hohen Zähigkeiten erhalten.

Bei allen diesen Arbeitsweisen kann die Förderung, Dosierung und Mischung von Einzelkomponenten oder Komponentengemischen mit den in der Polyurethan-Chemie an sich bekannten Vorrichtungen erfolgen.

Die Herstellung druckverteilender Elemente, die erfindungsgemäße Gelmassen erhalten, kann auf verschiedene Weise erfolgen. Man kann beispielsweise zunächst die Gelmassen in einer Form herstellen und die nach Ausreaktion druckfeste Gelmasse mit einer flexiblen Folie oder einem flexiblen Stoff umhüllen oder lackieren oder beschichten. Man kann auch nach einer besonders bevorzugten, sehr einfachen Verfahrensweise so vorgehen, daß die zur Herstellung der Gelmasse erforderlichen Komponenten mit einen mechanischen Mischer gemischt und die Mischung direkt in eine Hülle aus elastischer, flexibler Folie oder einem elastischen beschichteten textilen Flächengebilde gegossen wird.

Nach Zugabe der Mischung kann die Hülle dicht verschlossen und die Gelbildung darin sich selbst überlassen werden. Gegebenenfalls kann die Hülle während der Gelbildung zwischen zwei planparallelen Platten oder in eine andere Form gebracht werden. Dann entsteht ein druckverteilendes Element mit im wesentlichen paralleler Ober- und Unterseite oder einer Gestalt entsprechend der Innenseite der verwendeten Form. Je nach Art der Reaktionskomponenten, zugegebenen Katalysatoren und Temperaturführung kann die Zeit bis zur Beendigung der Gelbildung beispielsweise 1 Minute bis 12 Stunden betragen. Die Temperatur der eingesetzten Komponenten liegt vorzugsweise bei 10 bis 60°C.

Diese besonders bevorzugte Verfahrensweise erlaubt die Herstellung von druckverteilenden Elementen beliebiger Größe und Form in einfacher Weise dadurch, daß man die Hüllen in allgemein bekannter Weise in der entsprechenden Form herstellt und mit der gebildeten Masse füllt. Besonders bevorzugte Formen und Größen sind quadratische und rechteckige Kissen mit einer Kantenlänge von beispielsweise 20 bis 60 cm.

Die Dicke der druckverteilenden Elemente kann ebenfalls in weiten Grenzen variiert werden. Bei der Anwendung als Sitzkissen, meist einer quadratischen Form mit einer Kantenlänge von 35 bis 45 cm, werden mit Dicken von mehr als 2 cm die besten Ergebnisse erzielt. Bei der Anwendung als Matratze, Matratzeneinlage oder Matratzenauflage können auch druckverteilende Elemente geringerer Dicke vorteilhaft sein.

Bei Anwendungen, bei denen eine erfindungsgemäße selbsthaftende Gelmasse direkt auf der Körperoberfläche von Menschen oder Tieren plaziert wird, sind im allgemeinen Dicken der Gelschichten im Bereich von 1 mm bis 2 cm vorteilhaft.

Die erfindungsgemäßen Gelmassen haben die Eigenschaft, sich unter Druck zu deformieren, dabei den Druck zu verteilen, d.h. Druckspitzen zu erniedrigen, und nach dem Aufhören der deformierenden Kraft in ihren Ausgangszustand zurückzugehen. Diese Eigenschaft bewirkt, daß druckverteilende Elemente, die erfindungsgemäße Gelmassen enthalten, in der Lage sind, sich unter dem Druck einer darauf liegenden oder sitzenden Person so weit zu verformen, um eventuelle Druckwunden zu vermeiden oder vorhandene Wunden im Heilungsprozeß zu fördern.

Druckverteilende Elemente, die erfindungsgemäße Gelmassenenthalten, können in vielfältiger Weise angewendet werden, z.B. als Gel-Polster in orthopädischen Schuhen und Sportschuhen, auf Fahrradsätteln, unter Reitsätteln, auf Rollstühlen und Krankenbetten, auf Sitzflächen, Rückenflächen, Kopflehnen und Armlehnen von Sitzmöbeln, Autositzen oder sonstigen Sitzen, auf Operations- oder medizinischen Untersuchungstischen oder in Inkubatoren.

Weiterhin können druckverteilende Elemente, die aus einer erfindungsgemäßen Gelmasse mit einer einseitigen Abdeckung oder Beschichtung bestehen und eine hohe Haftfähigkeit aufweisen, insbesondere auf Körperoberflächen von Menschen und Tieren zur Anwendung kommen, z.B. als Auflagen auf Ellenbogen, Schienbeinen oder Fußoberflächen zur Vermeidung und Verminderung der Auswirkungen von Verletzungen, insbesondere beim Sport; als Auflagen für kosmetische Masken, z.B. Gesichtsmasken; als selbsthaftende Abdeckungen für Verbände im Augen- oder Ohrenbereich zum Zwecke der Befestigung; als Auflagen zur Unterstützungen von erschlafftem Gewebe im Brustbereich; als Abpolsterungen unter Pferdesätteln, an Prothesen oder an Windeln zur Verhinderung von Druckstellen.

Die vorliegende Erfindung stellt Gelmassen zur Verfügung, die sich einfacher als bisher maschinell fertigen lassen und eine höhere Strukturfestigkeit als bisher bekannte Gelmassen aufweisen.

Die nachfolgenden Beispiele erläutern die vorliegende Erfindung.

### Beispiele

### Allgemeines

In den Beispielen wurden die folgenden Polyisocyanate, Polyole und Katalysatoren eingesetzt:

### Polyisocyanat 1

Durch Prepolymerisierung mit Tripropylenglykol verflüssigtes 4,4'-Diisocyanatodiphenylmethan mit einer mittleren NCO-Funktionalität von 2,05 und einem NCO-Gehalt von 23 Gew.-%.

### Polyisocyanat 2

Handelsübliches biuretisiertes 1,6-Hexamethylendiisocyanat mit einer mittleren NCO-Funktionalität von 3,6, einem NCO-Gehalt von 21 Gew.-% und einem mittleren Molekulargewicht (Zahlenmittel) von 700.

### Polyisocyanat 3

Durch Phosgenierung von Anilin-Formaldehyd-Kondensaten erhaltenes technisches Polyisocyanatisomerengemisch (2-Kernanteil 90 Gew.-%, Anteil an 2,4-Isomeren, 45 Gew.-%), das mit einem Gemisch niederer Propylenglykole modifiziert ist und einen NCO-Gehalt von 24,5 Gew.-% aufwies.

### Polyole 1 bis 4

Bei diesen Polyolen handelte es sich um Polyether-Polyole die durch Anlagerung von Ethylenoxid und Propylenoxid an ein Startermolekül erhalten wurden. Sie sind in der nachfolgenden Tabelle zusammengestellt. TMP steht für Trimethylolpropan.

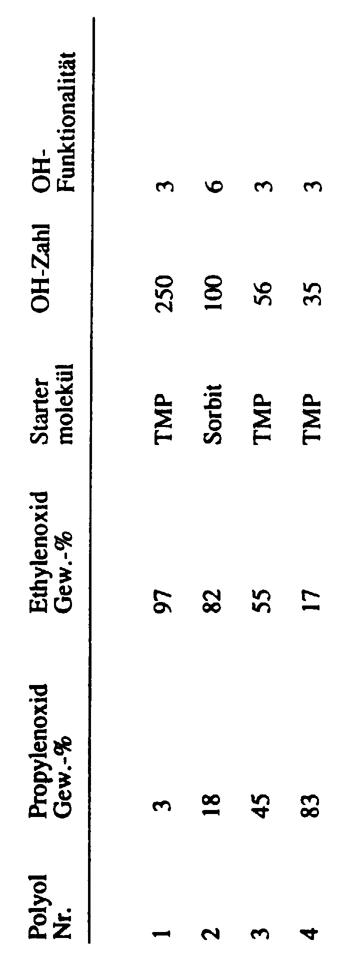

### Polyol 5

Polyester aus Adipinsäure, Butandiol-1,3 und Butandiol-1,4 mit einer Hydroxylzahl von 54.

### Katalysator 1

1,4-Diaza-bicyclo-(2,2,2)-octan als 33 gew.-%ige Dispersion in Dipropylenglykol.

### Katalysator 2

Di-n-butylzinn(IV)-dilaurat.

Im folgenden handelt es sich bei Teilen um Gewichtsteile.

### Beispiel 1

Zu einer Mischung aus 600 Teilen Polyol 1, 1 050 Teilen Polyol 3 und 1 350 Teilen Polyol 4 wurden 420 Teile Polyisocyanat 3 zugegeben und homogen vermischt. Zu dieser Mischung wurden 10 Teile des Katalysators 1 zugefügt und innerhalb von 30 Sekunden durch intensives Rühren gut verteilt. Das erhaltene Reaktionsgemisch wurde sofort in eine 40 x40 cm große Hülle aus Polyurethan-Folie einer Stärke von 0,2 mm gegossen. Die Folienhülle wurde luftdicht verschweißt und sofort auf eine ebene Unterlage gelegt. Die Verfestigung des Reaktionsgemisches zum Gel begann 4 Minuten nach der Zugabe des Katalysators und war nach weiteren 15 Minuten weitgehend abgeschlossen. Das erhaltene Gelkissen hatte eine Dicke von 2 cm. Als druckverteilende Auflage auf Schaumstoff-Sitzen verhindert es Druckwunden bei behinderten Personen, die über lange Zeiträume sitzen müssen.

### Beispiel 2

Eine Mischung aus 60 Teilen Polyol 1,105 Teilen Polyol 3 und 135 Teilen Polyol 4 wurde mit 46,8 Teilen Polyisocyanat 3 homogen vermischt. In dieser Mischung wurden 3 Teile Katalysator 1 innerhalb von 30 Sekunden verteilt. Die erhaltene Reaktionsmischung wurde sofort in eine tiefgezogene Schale, die aus 0,15 mm starker Polyurethan-Folie bestand und in einer Stützform lag, gegossen.

Die Verfestigung des Gemisches zum Gel begann 1 Minute nach der Zugabe des Katalysators und war nach einer weiteren Minute weitgehend abgeschlossen. Auf die Oberfläche des Gels wurde eine Polyurethan-Folie aufgelegt und ringsherum mit dem Rand der tiefgezogenen Folienschale verschweißt. Man erhielt ein Gelkissen der Abmessungen 1,5 x 10 x 20 cm. Ein derartiges Gelkissen ist zur Abpolsterung von Ellenbogen und Fersen bei bettlägrigen Patienten geeignet.

### Beispiel 3

Eine Mischung aus 200 Teilen Polyol 1, 50 Teilen Polyol 2 und 50 Teilen Polyol 3 wurde mit 87,5 Teilen Polyisocyanat 3 homogen vermischt. In dieser Mischung wurden 2,5 Teile Katalysator 1 innerhalb von 30 Sekunden verteilt. Die erhaltene Reaktionsmischung wurde sofort in eine offene Form (Grundfläche 10x10 cm, Höhe 4 cm) gegossen. Die Verfestigung des Gemisches zum Gel begann 60 Sekunden nach der Zugabe des Katalysators und war nach weiteren 30 Sekunden weitgehend abgeschlossen. Man erhielt ein Gel, das in Form kleiner Gelpolster zum Abpolstern von Sportschuhen geeignet ist.

### Beispiel 4

Eine Mischung aus 200 Teilen Polyol 1, 50 Teilen Polyol 2 und 50 Teilen Polyol 5 wurde mit 105 Teilen Polyisocyanat 3 homogen vermischt. In dieser Mischung wurden 2,5 Teile Katalysator 1 innerhalb von 30 Sekunden verteilt. Die erhaltene Reaktionsmischung wurde sofort in eine tiefgezogene Schale, die aus 0,15 mm starker Polyurethan-Folie bestand und in einer Stützform lag, gegossen . Die Verfestigung des Gemisches zum Gel begann 60 Sekunden nach der Zugabe des Katalysators und war nach weiteren 30 Sekunden weitgehend abgeschlossen. Ein derartiges Gel ist zum Füllen einer Hülle aus Polyurethanfolie (z.B. 200 µm stark) geeignet und kann so eine Gelauflage der Abmessungen 60x60x1,5 cm ergeben, die als Auflage auf Krankenbetten und Operationstischen zur Vermeidung von Druckwunden verwendbar ist.

### Beispiel 5

Eine Mischung aus 60 Teilen Polyol 1, 105 Teilen Polyol 3 und 135 Teilen Polyol 4 wurde mit 48 Teilen Polyisocyanat 1 homogen vermischt. In dieser Mischung wurden 1 Teil Katalysator 2 innerhalb von 30 Sekunden verteilt. Die erhaltene Reaktionsmischung wurde sofort in eine tiefgezogene Schale, die aus 0,15 mm starker Polyurethan-Folie bestand und in einer Stützform lag, gegossen. Die Verfestigung des Gemisches zum Gel begann 40 Sekunden nach der Zugabe des Katalysators und war nach weiteren 30 Sekunden weitgehend abgeschlossen. Ein so erhaltens Gel kann wie das des Beispiels 4 verwendet werden.

### Beispiel 6

Eine Mischung aus 20 Teilen Polyol 1 und 80 Teilen Polyol 3 wurde mit 10,5 Teilen Polyisocyanat 2 homogen vermischt. Die erhaltene trübe Emulsion wurde fünf Tage stehen gelassen. Sie erwies sich als lagerstabil. Nach dieser Zeit wurden 2 Teile Katalysator 2 innerhalb von einer Minute in der Emulsion homogen verteilt. Mit der erhaltenen Reaktionmischung wurde eine offene Form mit den Abmessungen 15x15 cm und einer Höhe von 2 mm randvoll gefüllt. Die Form war mit einer 1 mm starken Folie aus Polytetrafluorethylen ausgekleidet und in einem Trockenschrank auf 80°C vorgewärmt worden. Nach 5 Minuten, gerechnet ab der Zugabe des Katalysators, wurde ein 18x18 cm großes Stück eines elastischen Gewirkes aus Polyamid- und Polyurethanfasern (80:20) mittig aufgelegt. Die Verfestigung zum Gel erfolgte nach weiteren 2 Minuten. Nach einer Aushärtezeit von 15 Minuten bei 80°C und Abkühlung auf Raumtemperatur wurde eine selbsthaftende Auflage erhalten, die Schienbeine und Ellenbogen vor Sportverletzungen schützen kann.

### Beispiel 7

a) 160 Teile Poyol 1, 40 Teile Polyol 3 und 64 Teile Polyisocyanat 3 wurden homogen vermischt. Dann wurde 1 Teil Katalysator 1 zugegeben und innerhalb von 20 Sekunden verteilt. Die Verfestigung des Gemisches zum Gel begann eine Minute nach der Zugabe des Katalysators und war nach weiteren 3 Minuten weitgehend abgeschlossen. Man erhielt eine weich-elastische Gelmasse, deren Konsistenz nach der unten beschriebenen Meßmethode bestimmt wurde. Es wurde eine Penetrometerzahl von 77 ermittelt.
   Ähnliche Reaktionsmischungen wurden hergestellt und sich verfestigen gelassen, wobei jedoch das Polyisocyanat 3 in geringerer Menge eingesetzt wurde.
b) Beim Einsatz von 63,1 Teilen Polyisocyanat 3 wurde ein weich-elastisches Gel mit einer Penetrometerzahl von 98 erhalten.
   Das bedeutet, bei einem erfindungsgemäßen Ansatz aus 265 Teilen Reaktionsgemisch führt eine Fehldosierung von -0,9 Teilen Polyisocyanat zu keiner besonders ausgeprägten Änderung der Konsistenz des erhaltenen Produkts.
c) Beim Einsatz von 60,8 Teilen Polyisocyanat 3 bildete sich eine hochviskose Masse, die eine Penetrometerzil von 210 aufwies.
   Das bedeutet, bei einem erfindungsgemäßen Ansatz aus 265 Teilen Reaktionsgemisch führt erst eine Fehldosierung von -3,2 Teilen Polyisocyanat zu einer stark ausgeprägten Änderung der Konsistenz des erhaltenen Produkts.

### Bestimmung der Gelkonsistenz

Die Konsistenz der Gelmassen wurde mit dem Prüfgerät Penetrometer nach DIN und ASTM bestimmt. Es wurde unter folgenden Bedingungen geprüft:

| | |
|---|---|
| Penetrationskörper: | Halbkugel mit 25 mm Durchmesser |
| Penetrationsgewicht: | 100 g |
| Penetrationszeit: | 10 Sekunden |
| Temperatur der Gelmassen: | 25°C |

Auf einer Anzeigevorrichtung wurde die jeweilige Penetrationstiefe in 1/10 mm-Einheiten abgelesen, was die jeweilige Penetrometerzahl ergibt.

### Beispiel 8 (Vergleichsbeispiel)

a) Eine nicht - erfindungsgemäße Gelmasse (hergestellt ohne Verwendung eines Polyols mit einer Hydroxylzahl von größer 112) die eine ähnliche Penetrationszahl wie das Gel aus Beispiel 7 a) aufwies, wurde wie folgt erhalten:
   200 Teile Polyol 3 und 18 Teile Polyisocyanat 3 wurden homogen vermischt. Dann wurden 4 Teile Katalysator 1 zugegeben und innerhalb von 30 Sekunden verteilt. Die Verfestigung des Gemisches zum Gel begann eine Minute nach der Zugabe des Katalysators und war nach 12 Stunden weitgehend abgeschlossen. Die erhaltene weich-elastische Gelmasse wies, bestimmt nach der in Beispiel 7 beschriebenen Meßmethode, eine Penetrometerzahl von 79 auf.
b) Die entsprechende Herstellung einer Reaktionsmischung und deren Gelierung, bei der jedoch statt 18 Teilen Polyisocyanat 3 nur 17,1 Teile dieser Komponente eingesetzt wurden, ergab eine hochviskose Masse, die eine Penetrometerzahl von 225 aufwies.
   Das bedeutet, bei einem nicht - erfindungsgemäßen Ansatz aus 222 Teilen Reaktionsgemisch führt eine Fehldosierung von -0,9 Teilen Polyisocyanat bereits zu einer stark ausgeprägten Änderung der Konsistenz des erhaltenen Produkts.

## Patentansprüche

1. Verbesserte Gelmassen auf Basis von Reaktionsprodukten aus Polyolen und Polyisocyanaten, dadurch gekennzeichnet, daß die Polyolkomponente aus einem Gemisch aus
a) einem oder mehreren Polyolen mit Hydroxylzahlen unter 112 und
b) einem oder mehreren Polyolen mit Hydroxylzahlen im Bereich 112 bis 600 besteht,
wobei das Gewichtsverhältnis der Komponente a) zu Komponente b) zwischen 90:10 und 10:90 liegt, die Isocyanat-Kennzahl des Reaktionsgemisches im Bereich von 15 bis 59,81 liegt und das Produkt aus Isocyanat-Funktionalität und Funktionalität der Polyolkomponente mindestens 6,15 beträgt.

2. Gelmassen nach Anspruch 1, dadurch gekennzeichnet, daß sie zusätzlich aus der Polyurethanchemie bekannte Füll- und/oder Zusatzstoffe in einer Menge von insgesamt bis zu 50 Gew.-%, bezogen auf das Gesamtgewicht der Gelmasse, enthalten.

3. Verfahren zur Herstellung von Gelmassen, dadurch gekennzeichnet, daß man eine Mischung aus
a) einem oder mehreren Polyisocyanaten und
b) einer Polyolkomponente, bestehend aus
- einem oder mehreren Polyolen (b₁) mit Hydroxylzahlen unter 112 und
- einem oder mehreren Polyolen (b₂) mit Hydroxylzahlen im Bereich 112 bis 600 und
c) gegebenenfalls einem Katalysator für die Reaktion zwischen Isocyanat- und Hydroxylgruppen und
d) gegebenenfalls aus der Polyurethanchemie an sich bekannten Füll- und/oder Zusatzstoffen,
wobei das Gewichtsverhältnis der Komponente (b₁) zu Komponente (b₂) zwischen 90:10 und 10:90 liegt, die Isocyanat-Kennzahl des Reaktionsgemisches im Bereich von 15 bis 59,81 liegt und das Produkt aus Isocyanat-Funktionalität und Funktionalität der Polyolkomponente mindestens 6,15 beträgt, gelieren läßt.

4. Verfahren nach Anspruch 3, dadurch gekennzeichnet, daß als Polyolkomponente Polyhydroxypolyether mit 2 bis 8 Hydroxylgruppen pro Molekül eingesetzt werden.

5. Verfahren nach Ansprüchen 3 und 4, dadurch gekennzeichnet, daß man als Isocyanate solche der Formel
Q(NCO)ₙ
einsetzt,
in der
n für 2 bis 4 steht und
Q einen aliphatischen Kohlenwasserstoffrest mit 8 bis 18 C-Atomen, einen cycloaliphatischen Kohlenwasserstoffrest mit 4 bis 15 C-Atomen, einen aromatischen Kohlenwasserstoffrest mit 6 bis 15 C-Atomen oder einen araliphatischen Kohlenwasserstoffrest mit 8 bis 15 C-Atomen bedeutet.

6. Verfahren nach Ansprüchen 3 bis 5, dadurch gekennzeichnet, daß man einen Katalysator in einer Menge von 0,1 bis 10 Gew.-%, bezogen auf das Gesamtgewicht des Gemisches zur Gelmassenherstellung, einsetzt, der ausgewählt ist aus der Gruppe tertiärer Amine, Silamine, stickstoffhaltiger Basen, Alkalihydroxide, Alkaliphenolate, Hexahydrotriazine und organischen Zinnverbindungen.

7. Verfahren nach Ansprüche 3 bis 6, dadurch gekennzeichnet, daß man bis zu 50 Gew.-%, bezogen auf das Gesamtgewicht der Gelmasse, Füll- und/oder Zusatzstoffe einsetzt, ausgewählt aus der Gruppe anorganischer und organischer Füllstoffe, färbender Agenzien, wasserbindender Mittel, oberflächenaktiven Substanzen, Pflanzenschutzmitteln, Streckmitteln und Weichmachern.

8. Verwendung der Gelmassen nach Ansprüchen 1 und 2 und/oder hergestellt gemäß Ansprüchen 4 bis 9, gegebenenfalls versehen mit einer Beschichtung, Abdeckung oder Umhüllung, als druckverteilende Elemente.

## Claims

1. Improved gel compositions based on reaction products of polyols and polyisocyanates, characterised in that the polyol component consists of a mixture of
a) one or more polyols having hydroxyl values of below 112 and
b) one or more polyols having hydroxyl values in the range from 112 to 600,
wherein the ratio by weight of component a) to component b) is between 90:10 and 10:90, the isocyanate index of the reaction mixture is in the range from 15 to 59.81 and the product of isocyanate functionality and polyol component functionality is at least 6.15.

2. Gel compositions according in claim 1, characterised in that they additionally contain fillers and/or additives known from polyurethane chemistry in a total quantity of up to 50 wt.%, relative to the total weight of the gel composition.

3. Process for the production of gel compositions, characterised in that a mixture of
a) one or more polyisocyanates and
b) a polyol component consisting of
- one or more polyols (b₁) having hydroxyl values of below 112 and
- one or more polyols (b₂) having hydroxyl values in the range from 112 to 600 and
c) optionally a catalyst for the reaction between isocyanate groups and hydroxyl groups and
d) optionally fillers and/or additives known *per se* from polyurethane chemistry,
wherein the ratio of component (b₁) to component (b₂) is between 90:10 and 10:90, the isocyanate index of the reaction mixture is in the range from 15 to 59.81 and the product of isocyanate functionality and polyol component functionality is at least 6.15, is allowed to gel.

4. Process according to claim 3, characterised in that polyhydroxypolyethers having 2 to 8 hydroxyl groups per molecule are used as the polyol component.

5. Process according to claims 3 and 4, characterised in that isocyanates of the formula
Q(NCO)ₙ
are used,
in which
n denotes 2 to 4 and
Q means an aliphatic hydrocarbon residue having 8 to 18 C atoms, a cycloaliphatic hydrocarbon residue having 4 to 15 C atoms, an aromatic hydrocarbon residue having 6 to 15 C atoms or an araliphatic hydrocarbon residue having 8 to 15 C atoms.

6. Process according to claims 3 to 5, characterised in that a catalyst is used in a quantity of 0.1 to 10 wt.%, relative to the total weight of the mixture for production of the gel composition, which catalyst is selected from the group comprising tertiary amines, silamines, bases containing nitrogen, alkali metal hydroxides, alkali metal phenolates, hexahydrotriazines and organotin compounds.

7. Process according to claims 3 to 6, characterised in that fillers and/or additives selected from the group comprising inorganic and organic fillers, colouring agents, water-binding agents, surface-active substances, plant protection agents, extenders and plasticisers are used in a quantity of up to 50 wt.%, relative to the total weight of the gel composition.

8. Use of the gel compositions according to claims 1 and 2 and/or produced according to claims 4 to 9, optionally provided with a coating, covering or envelope, as pressure-distributing elements.

## Revendications

1. Matières de gels améliorées à base de produits de réaction de polyols et de polyisocyanates, caractérisées en ce que le constituant de polyol est constitué d'un mélange
a) d'un ou plusieurs polyols présentant des indices d'hydroxyle inférieurs à 112 et
b) d'un ou plusieurs polyols présentant des indices d'hydroxyle dans le domaine de 112 à 600,
le rapport massique du constituant a) au constituant b) étant compris entre 90 : 10 et 10 : 90, le nombre caractéristique d'isocyanate du mélange réactionnel se trouvant dans le domaine de 15 à 59,81 et le produit de la fonctionnalité isocyanate et de la fonctionnalité du constituant de polyol étant d'au moins 6,15.

2. Matières de gels selon la revendication 1, caractérisées en ce qu'elles contiennent en outre des matières additives et/ou de charge connues dans la chimie du polyuréthane dans une quantité allant au total jusqu'à 50 % en poids, rapportés au poids total de la matière de gel.

3. Procédé pour la préparation de matières de gels, caractérisé en ce qu'on laisse gélifier un mélange constitué
a) d'un ou plusieurs polyisocyanates, et
b) d'un constituant de polyol constitué
- d'un ou plusieurs polyols (b1) présentant des indices d'hydroxyle inférieurs à 112 et
- d'un ou plusieurs polyols (b2) présentant des indices d'hydroxyle dans le domaine de 112 à 600, et
c) éventuellement d'un catalyseur pour la réaction entre les groupes isocyanates et hydroxyles, et
d) éventuellement de matières additives et/ou de charge connues en elles-mêmes dans la chimie du polyuréthane,
le rapport massique du constituant (b1) au constituant (b2) étant compris entre 90 : 10 et 10 : 90, le nombre caractéristique d'isocyanate du mélange réactionnel se trouvant dans le domaine de 15 à 59,81 et le produit de la fonctionnalité isocyanate et de la fonctionnalité du constituant de polyol étant d'au moins 6,15.

4. Procédé selon la revendication 3, caractérisé en ce qu'on utilise en tant que constituants de polyols des polyhydroxy-polyéthers présentant de 2 à 8 groupes hydroxyles par molécule.

5. Procédé selon les revendications 3 et 4, caractérisé en ce qu'on utilise en tant qu'isocyanates ceux de la formule :
Q(NCO)ₙ
dans laquelle
n est compris entre 2 et 4 et
Q représente un résidu hydrocarboné aliphatique avec de 8 à 18 atomes de carbone, un résidu hydrocarboné cycloaliphatique avec de 4 à 15 atomes de carbone, un résidu hydrocarboné aromatique avec de 6 à 15 atomes de carbone ou un résidu hydrocarboné araliphatique avec de 8 à 15 atomes de carbone.

6. Procédé selon l'une quelconque des revendications 3 à 5, caractérisé en ce qu'on utilise un catalyseur dans une quantité de 0,1 à 10 % en poids, rapportés au poids total du mélange pour la préparation de matières de gels, qui est choisi parmi des amines tertiaires, des silaamines, des bases contenant de l'azote, des hydroxydes d'alcalis, des phénolates d'alcalis, des hexahydrotriazines et des composés organiques de l'étain.

7. Procédé selon l'une quelconque des revendications 3 à 6, caractérisé en ce qu'on utilise jusqu'à 50 % en poids, rapportés au poids total de la matière de gel, de matières additives et/ou de charge, choisies parmi des matières de charge inorganiques et organiques, des agents colorants, un agent liant l'eau, des substances tensioactives, des agents phytosanitaires, des diluants et des assouplissants.

8. Utilisation des matières de gels selon les revendications 1 et 2 et/ou préparées selon l'une quelconque des revendications 3 à 7, éventuellement munies d'un revêtement, d'une couverture ou d'une enveloppe en tant qu'éléments répartissant la compression.
